# EUROPÄISCHE PATENTSCHRIFT

(11) **EP 0 295 198 B1**
(45) Veröffentlichungstag und Bekanntmachung des Hinweises auf die Patenterteilung: **01.09.1993**
(21) Anmeldenummer: 88730130.7
(22) Anmeldetag: 03.06.1988
(51) Int. Cl.: H04Q 11/04, H04Q 3/545

(54) **Verfahren zur Steuerung eines digitalen Kommunikationsystems durch eine Organisationssystemsteuerung**
Method for controlling a digital communication system by a system controller
Méthode pour la commande d'un système de communication numérique par un dispositif de commande d'organisation

(30) Priorität: 04.06.1987 DE 3718989
(43) Veröffentlichungstag der Anmeldung: 14.12.1988
(73) Patentinhaber: SIEMENS AKTIENGESELLSCHAFT, 80333 München (DE)
(72) Erfinder: Köninger, Richard, Dipl.-Ing., D-4650 Gelsenkirchen (DE)

(56) Entgegenhaltungen:
- IBM TECHNICAL DISCLOSURE BULLETIN, Band 26, Nr. 10A, März 1984, Seiten 5144-5145, New York, US; L.L. CHANG et al.: "Hierarchical multiprocessor system for telephone switch network"
- TELCOM, Band 9, Nr. 4, Juli/Augustus 1986, Seiten 257-263, Berlin, DE; H. Fellinger et al.: "Höhere Steuerleistung im EWSD durch den Koordinationsprozessor CP113"
- NACHRICHTENTECH. ELEKTRON., Band 35, Nr. 2, 1985, Seiten 45-47, Leipzig, DD; H. KIESER: "Software für eine digitale Vermittlungsanlage mit modularem Aufbau"
- PHOENIX CONFERENCE ON COMPUTERS AND COMMUNICATIONS, 20.-22. März 1985, Seiten 185-189, IEEE, Scottsdale, US; B.A. LAWS, Jr. et al.: "MCPOS - A realtime telephony operating system"
- THE FOURTEENTH INTERNATIONAL CONFERENCE ON FAULT-TOLERANT COMPUTING, 20.-22. Juni 1984, Seiten 341-346, IEEE, Kissimmee, US; G. COMI et al.: "TDFS: A distributed file server for reliable applications in telecommunication systems"
- PROCEEDINGS OF THE NATIONAL ELECTRONICS CONFERENCE, Band 37, 1983, Seiten 230-233, Oak Brook, US; A.R. FLORA-HOLMQUIST: "Operating system for distributed switching for telecommunications"
- IEEE INTERNATIONAL CONFERENCE ON COMMUNICATIONS, 14.-17. Mai 1984, Band 2, Seiten 535-538, IEEE/Elsevier Science Publishers B.V., Amsterdam, NL; S.S. AL-WAKEEL: "Distributed software for a modular digital switch"

## Beschreibung

Die Erfindung betrifft ein Verfahren zur Steuerung eines digitalen Kommunikationssystems mit einem zentralen Datenprozessor und mit mehreren, periphere Einrichtungen steuernde, dezentrale Ein- und Ausgabeprozessoren, wobei das funktionelle Einwirken des zentralen Datenprozessors mit den dezentralen Ein-Ausgabeprozessoren untereinander und mit den peripheren Einrichtungen durch eine Organisationssystemsteuerung erfolgt.

Derart definierte Kommunikationssysteme - z. B. aus der europäischen Patentanmeldung EP-A-0 347644, veröffentlicht am 27/12/89, bekannt - stellen modular aufgebaute Nebenstellenanlagen mit wenigen Standardschnittstellen dar, die entsprechend der zu erfüllenden Aufgaben in unterschiedlichsten Anlagengrößen aufgebaut sind. Die Nebenstellenanlagen können sowohl an öffentliche Netze und Dienste - Fernsprechnetz, Teletexnetz etc. - als auch an private Netze - Unteranlagen, Querverbindungsleitungen - angeschlossen sein. Als Teilnehmeranschlüsse sind analoge und digitale Endgeräte vorgesehen. Außerdem bestehen über entsprechende Schnittstellen zusätzliche Anschlußmöglichkeiten von externen Geräten, wie Drucker, betriebstechnische Terminals (PC) usw.

Aus der Druckschrift IBM TDB, Vol. 26, Nr. 10A, 3/84, S.5144-5145, New York, US; L.L. CHANG et al, ist ein Kommunikationssystem mit zwei Strukturebenen bekannt, bei dem mehrere periphere Einrichtungen direkt an einen zentralen Datenprozessor angeschlossen sind. Bei diesem, im wesentlichen hardwarestrukturierten Kommunikationssystem ist keine spezielle Organisationssystemsteuerung vorgesehen.

Die Systemarchitektur komplexerer Kommunikationssysteme ist einheitlich in drei Ebenen strukturiert: Peripherie, dezentrale Ein-Ausgabeprozessoren und zentraler Datenprozessor.
Zur Peripherie gehören danach Baugruppen als Schnittstellen zu den angeschalteten Endgeräten und Leitungen (Teilnehmerschaltungen, Leitungsschaltungen) und Baugruppen für den Verbindungsaufbau, wie Signalisierungseinrichtungen, Sender und Empfänger.

Die zeitkritische Bearbeitung der Peripherie wird durch die dezentralen Ein-Ausgabeprozessoren übernommen, wobei die Anzahl der peripheren Einrichtungen bzw. die der Anschlußeinheiten für jeden Ein-Ausgabeprozessor in Abhängigkeit der maximal zu verarbeitenden Gesamtdatenmenge begrenzt ist. Die Ein-Ausgabeprozessoren sind somit unter anderem für die Steuerung der Standardschnittstellen und der lokalen Busse, der Ziffernauswertung, der Anschaltung von Ton- und Ruftakten und der sicherheitstechnischen Anzeigen vorgesehen.
Der zentrale Datenprozessor dagegen koordiniert die Steuerung sämtlicher im Kommunikationssystem vorhandener Einrichtungen über entsprechende Busverbindungen. Außerdem werden vom zentralen Datenprozessor die Rücksetz-Logik und sicherheitstechnische Vorgänge zentral gesteuert.

Die Schnittstelle zwischen der Peripherie und dem jeweiligen dezentralen Ein-Ausgabeprozessor wird durch eine HDLC-Standardschnittstelle gebildet, die in der peripheren Einrichtung enthalten ist. Dagegen wird die Schnittstelle zwischen dem dezentralen Ein-Ausgabeprozessor und dem zentralen Datenprozessor durch einen Mehrfachzugriffsspeicher gebildet, der von beiden Prozessoren beschrieben und ausgelesen werden kann. Die Steuerung dieses Mehrfachzugriffsspeichers erfolgt üblicherweise durch das eingesetzte Betriebssystem.

Aus der Druckschrift von B.A. LAWS et al (PHOENIX CCC'85 20-22. März 1985, S. 185-189. IEEE, Scottsdale, US) ist ein Betriebssystem für ein dezentral strukturiertes Telefonvermittlungssystem bekannt, bei dem kein zentraler Datenprozessor, sondern mehrere Modul-Prozessoren untereinander verbunden sind. Dieses Betriebssystem einschließlich einer Drganisationssystemsteuerung ist auf eine dezentrale Struktur, d. h. dezentrale Aufteilung insbesondere von vermittlungstechnischen Funktionen, abgestimmt.

Die der Erfindung zugrunde liegende Aufgabe besteht darin, ein Verfahren der eingangs definierten Kommunikationssysteme anzugeben, mit dem die Organisationssystemsteuerung flexibler gestaltet werden kann, so daß sowohl die zunächst anlagenspezifischen Steuerungsvorgänge als auch die durch nachträgliche Änderungen der Anlage bedingten Steuerungsabläufe mit minimalen Änderungen der vorhandenen Organisationssystemsteuerungen erfolgen kann. Erfindungsgemäß wird dies durch die Kombination der Merkmale des Patentanspruchs 1 erreicht.

Mit der Entkopplung der Organisationssystemsteuerung und deren Aufgliederung in Einzelproblemlösungen ist erreicht, daß die Funktionsabläufe nicht mehr teilnehmer- und/oder baugruppenorientiert sind. Diese Aufgliederung in einzelne, in sich abgeschlossenen Problemlösungen, ermöglicht in einfacher Weise, daß auch nachträgliche Änderungen in der Ablaufsteuereinheit vorzunehmen sind, ohne die gesamte Organisationssystemsteuerung entsprechend anpassen zu müssen. Die Ablaufsteuereinheiten können beispielsweise durch Ruf- und Hörtonsteuerungen gebildet sein. Eine weitere Ablaufsteuereinheit mit höchstwertigster Priorität ist die Unterbrechungs- und Zeittaktsteuerung, die unter anderem den sogenannten Interrupt innerhalb der Anlage steuert. Ein Zeittakt, mit dem z. B. alle 8 ms Zeitüberwachungsglieder erneut gestartet werden, um so den ordnungsgemäßen Datenverarbeitungsablauf zwischen dem zentralen Datenprozessor und den dezentralen Ein-Ausgabeprozessoren zu markieren. Andere Ablaufeinheiten sind Adressen- und sogenannte Scansteuerungen sowie Sicherheitsschaltungen.

Gemäß einer vorteilhaften Ausgestaltung der Erfindung ist vorgesehen, daß die Ablaufsteuereinheiten zu jedem Zeitpunkt einen definierten Funktionszustand aufweisen und durch den zentralen Datenprozessor und/oder durch den dezentralen Ein-Ausgabeprozessor parallel ansteuerbar sind. Damit ist sichergestellt, daß in einfacher Weise Teilfunktionen untereinander zu verschachteln sind, die zum Teil auch parallel Schaltfolgen steuern können.

Die Erfindung wird in einem figürlich dargestellten Ausführungsbeispiel näher erläutert, in dem lediglich die wesentlichen zum Verständnis der Erfindung notwendigen Schalt- und Steuereinrichtungen als Blockschaltbild dargestellt sind.

Der Ein-Ausgabeprozessor IOP enthält die Organisationssystemsteuerung OSS, die aus den Ablaufsteuereinheiten AE1, AE2 bis AEn besteht. Die Ablaufsteuereinheiten AE... sind mit unterschiedlichen Prioritäten versehen, wobei im Ausführungsbeispiel die Ablaufsteuereinheit AE1 die höchstwertigste Priorität aufweist, während die Ablaufsteuereinheit mit niederwertigster Priorität mit AEn bezeichnet ist. Die Ablaufsteuereinheit mit höchstwertigster Priorität AE1 wird mit dem Rücksetz-Haltezustandsbefehl IR angesteuert und ist für die sogenannte Interrupt-Steuerung der Anlage verantwortlich. Außerdem ist erkennbar, daß die Organisationssystemsteuerung OSS mit den peripheren Einrichtungen PBC - dargestellt ist lediglich eine einzige periphere Einrichtung - dem Mehrfachzugriffsspeicher DPR und dem Arbeitsspeicher MEM in Verbindung steht. Der Mehrfachzugriffsspeicher DPR kann sowohl von dem zentralen Datenprozessor DP, als auch von den peripheren Einrichtungen PBC Daten übernehmen bzw. übergeben.
Die Ablaufsteuereinheiten AE2 bis AE6 stellen prioritätsmarkierte Steuerungen für Ruf-und Hörtöne, Adressenspeicher, Signalausgänge und Zeitsteuerungen des Kommunikationssystems dar.

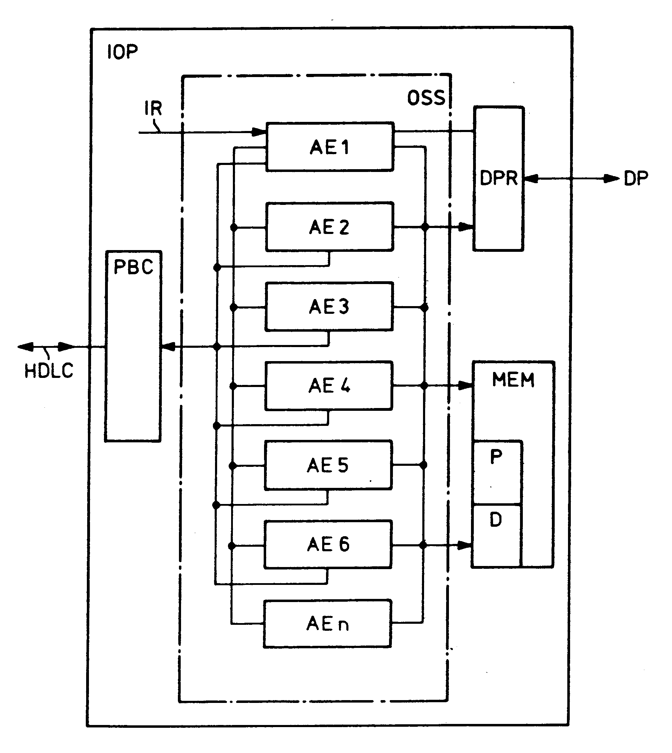

## Patentansprüche

1. Verfahren zur Steuerung eines digitalen Kommunikationssystems mit einem zentralen Datenprozessor und mit mehreren, periphere Einrichtungen steuernden, dezentralen Ein- und Ausgabeprozessoren, wobei die internen Funktionsabläufe und das funktionelle Zusammenwirken des zentralen Datenprozessors mit den dezentralen Ein-/Ausgabeprozessoren und mit den peripheren Einrichtungen durch eine Organisationssystemsteuerung koordiniert werden,
**gekennzeichnet durch**
die folgenden Merkmale,
- die im Ein-/Ausgabeprozessor (IOP) vorgesehene Organisationssystemsteuerung (OSS) ist in modulare Ablaufsteuereinheiten (AE1 bis AEn) zur Abarbeitung von untereinander entkoppelten Einzelproblemlösungen aufgegliedert,
- den Ablaufsteuereinheiten (AE1 bis AEn) sind funktionsbezogen jeweils unterschiedliche Parameter mit eindeutiger Priorität zugeordnet,
- die Ablaufsteuereinheiten (AE1 bis AEn) enthalten jeweils voneinander unabhängig ablauffähige Schaltfolgen zwischen dem zentralen Datenprozessor (DP) und/oder einem dezentralen Ein-/Ausgabeprozessor (IOP) und einer peripheren Einrichtung (PBC).

2. Verfahren nach Anspruch 1,
**gekennzeichnet durch**
die Kombination der Merkmale:
- die Ablaufsteuereinheiten (AE1 bis AEn) weisen zu jedem Zeitpunkt einen definierten Funktionszustand auf,
- die Ablaufsteuereinheiten (AE1 bis AEn) sind durch den zentralen Datenprozessor (DP) und/oder durch den dezentralen Ein-/Ausgabeprozessor (IOP) parallel ansteuerbar.

## Claims

1. Method for controlling a digital communications system comprising a central data processor and several decentralised input and output processors controlling peripheral devices, the internal functional sequences and the functional interaction of the central data processor with the decentralised input/output processors and the peripheral devices being co-ordinated by an organisational-system controller, characterised by the following features
- the organisational-system controller (OSS) provided in the input/output processor (IOP) is divided into modular sequence control units (AE1 to AEn) for processing mutually decoupled single-problem solutions,
- the sequence control units (AE1 to AEn) are in each case allocated function-related different parameters having unambiguous priority,
- the sequence control units (AE1 to AEn) in each case contain mutually independent executable switching sequences between the central data processor (DP) and/or a decentralised input/output processor (IOP) and a peripheral device (PBC).

2. Method according to Claim 1, characterised by the combination of the features:
- the sequence control units (AE1 to AEn) exhibit a defined functional state at each time,
- the sequence control units (AE1 to AEn) can be selected in parallel by the central data processor (DP) and/or by the decentralised input/output processor (IOP).

## Revendications

1. Procédé pour commander un système de communication numérique comportant un processeur central de données et plusieurs processeurs d'entrée et de sortie décentralisés qui commandent des dispositifs périphériques, du type dans lequel les déroulements de fonction interne et la coopération fonctionnelle du processeur central de données sont coordonnés, par une commande du système d'organisation,
- avec les processeurs d'entrée et de sortie décentralisés et avec les dispositifs périphériques.
caractérisé par les particularités suivantes,
- la commande du système d'organisation (OSS) prévue dans le processeur d'entrée/sortie (IOP), est subdivisée, en unités modulaires de commande de déroulement (AE1 à AEn) pour résoudre des problèmes individuels rendus autonomes entre eux,
- aux unités de commande de déroulement (AE1 à AEn) sont associés respectivement des paramètres différents à priorités univoques et rapportés à une fonction,
- les unités de commande de déroulement (AE1 à AEn)
comportent respectivement des séquences de commutation exécutables indépendamment les unes des autres entre le processeur central de données (DP) et/ou un processeur d'entrée/sortie (IOP) décentralisé et un dispositif périphérique (PBC).

2. Procédé selon la revendication 1, remarquable par la combinaison des caractéristiques :
- les unités de commande de déroulement (AE1 à AEn) présentent à chaque instant un état fonctionnel défini,
- les unités de commande de déroulement (AE1 à AEn) sont susceptibles d'être commandées en parallèle par le processeur central de données (DP) et/ou par le processeur d'entrée/sortie (IOP) décentralisé.
